Europäisches Patentamt

European Patent Office

Office européen des brevets

(11) Publication number: **0 280 989**
**A1**

## (12) EUROPEAN PATENT APPLICATION

(21) Application number: **88102595.1**

(22) Date of filing: **23.02.88**

(51) Int. Cl.4: **G02B 6/44**

(30) Priority: **02.03.87 IT 1954287**

(43) Date of publication of application:
**07.09.88 Bulletin 88/36**

(84) Designated Contracting States:
**CH DE ES FR GB LI SE**

(71) Applicant: **SOCIETA' CAVI PIRELLI S.p.A.**
**Piazzale Cadorna 5**
**I-20123 Milano(IT)**

(72) Inventor: **Seveso, Cesare**
**Via Brambilla, 13**
**Cinisello Balsamo (MI)(IT)**
Inventor: **Lucchini, Luigi**
**Via S. Matteo, 4**
**Capriate San Gervasio (BG)(IT)**

(74) Representative: **Mariani, Giorgio, Dr. et al**
**INDUSTRIE PIRELLI S.p.A. Direzione Brevetti**
**Piazzale Cadorna, 5**
**I-20123 Milano(IT)**

(54) **Apparatus for manufacturing cables comprising optical fibers.**

(57) The invention concerns an improved apparatus used to manufacture cables (15) having their core (5) provided with grooves (6), in the form of an open helix, which contain optical fibers (3).

The improvement consists in the adoption of optical systems (17, 18, 19, 20) able to detect the deviation of the optical fibers from a pre-established catenary configuration in the part of the apparatus in which they are not guided or supported.

On the ground of said determination, the speed at which the optical fibers are paid off from the coils (1) encasing them is varied to obtain again the desired pre-established catenary configuration.

Fig. 1

EP 0 280 989 A1

## "APPARATUS FOR MANUFACTURING CABLES COMPRISING OPTICAL FIBERS"

The present invention relates to an apparatus for the manufacture of cables comprising optical fibers of the type containing a core, generally cylindrical, whose outer surface carries a plurality of grooves having an open helix path, each of which encases loosely at least one optical fiber.

In the present specification the expression "open helix", referred to the path of the grooves, means that they are formed by Z-shaped and S-shaped alternate portions.

The core provided with grooves is generally but not exclusively made of plastic material and in this case it contains at least a tension and compression resistant element.

The core is moreover provided with a covering, formed for instance by an extruded layer of plastic material, or with a winding of one or more tapes, made for example of plastic material, which close the grooves outwardly, protecting the optical fibers therein contained.

Apparatuses of various type intended to manufacture cables, comprising optical fibers, in which the cores are provided with grooves having an open helix path, are already known.

These conventional apparatuses of a first type, as for instance that described in the European Patent application No. 20189, comprise a rotary frame, supporting the coil from which the optical fibers are paid off to be sent to the grooves of the core of the cable being produced, which moves forward by rectilenear motion. The insertion of the optical fibers in the grooves is obtained by virtue of a head which rotates around the core.

A taping device, which closes the grooves outwardly, thus covering the core, is provided downstream said head.

The frame is placed into rotation around the core by a motor associated to it, whilst the head rotates, owing to the rectilinear forward motion of the core, by virtue of extensions, cantilievered in a through cavity internal to the head, which engage with the grooves of the core. The extensions are provided with through holes for the passage of the optical fibers coming from the coils.

To prevent micro-bendings and tension stresses which might be dangerous for the optical fibers, the rotation of the frame carrying the coils is adjusted in accordance with that of the head, eliminating therefore the above indicated macroscopic drawbacks.

However, as no control exists regarding the rotation of the coils around their own axis, during the passage of the optical fibers from the coils to the head there is still the risk that they may suffer such micro-bendings and tension stresses as not to insure the necessary plenty of optical fiber in the grooves of the produced cable.

The already known apparatuses of a second type, as for instance that described in the Italian Patent No. 24091 A/84 of the same Applicant, comprise a fixed frame supporting the coils which pay off the optical fibers to be inserted in the cable core by means of a head identical to that described above.

Between the frame and the head provisions is made of a rigid tubular body into which passes the cable core and on whose outer surface the optical fibers lean during their winding and unwinding.

Also this apparatus comprises a device, situated downstream the head, which close the grooves outwardly by means of a covering around the core.

Also this second type of aparatus shows the disadvantages ascertained in those of the first type.

Said disadvantages lead to the manufacture of cables in which the signals to be transmitted may lose intensity in cosenquence of micro-bendings suffered by the optical fibers during their insertion in the grooves.

Further, as the plenty of optical fibers in the grooves is the more relevant the smaller the tension stress exerted onto them during insertion, the impossibility by the conventional apparatuses to reduce said tension stress to a pre-established value may give rise to an insufficient plenty of optical fibers in said grooves which, during the laying of the produced cable, would involve the creation of tensions prejudicial for the integrity of said optical fibers.

The present invention aims at providing an apparatus for manufacturing cables comprising optical fibers, devoid of the disadvantages indicated above in respect of the conventional apparatuses, which is able to insert the optical fibers in the grooves of the cable core without imparting micro-bendings and with a tension stress smaller than a pre-established value in order to ensure a plenty of optical fibers in said gooves and consequently to prevent, during the cable laying, the generation of tensions prejudicial for said optical fibers.

Accordingly, the subject matter of the present invention is an apparatus for manufacturing cables comprising optical fibers, of the type containing a core provided on its outer surface with at least a groove in the form of an open helix which encases at least an optical fiber, said apparatus comprising:
- a plurality of coils containing the optical fibers, which rotate about their own axis and are mounted on a fixed frame,
- a head to insert the optical fibers in the grooves of the core which is provided with a through cavity for the passage of the latter and with a plurality of extensions, to be inserted in the core grooves, cantilevered in said through cavity and having a through hole for the passage of the optical fibers,
- a rigid tubular body interposed between the coil-holding frame and the head, which permits the passage of the cable core and which supports the optical fibers on its outer surface,
- a mechanism for the rectilinear advancement of the core, originating the alternative rotary movement of said head,
the apparatus being characterized by the fact of comprising:
- a mechanism for paying off the optical fibers from the coils containing them,
- a first and a second optical system for each optical fiber, respectively situated in the upper and in the lower part of a fixed frame into which passes an individual optical fiber having a catenary configuration, the first optical system comprising at least one photoelectric cell, arranged transversally to the direction of advancement of the optical fiber and intended to issue signals determining an increase in the speed of the mechanism paying off the optical fiber, the second optical system comprising at least one photoelectric cell, arranged transversally to the direction of advancement of the optical fiber and intended to issue signals determining a decrease in the speed of the mechanism paying off the optical fiber, the plane defined by the catenary configuration of the optical fiber intersecting said photoelectric cells.

In a preferred embodiment of an apparatus according to the invention, both the first and the second optical system comprise two photoelectric cells. In that case the photoelectric cells of the two optical systems which are the farthest from each other issue signals determining respectively the permanent increase and decrease in the speed of the mechanism paying off the optical fibers; on the contrary, the photoelectric cells of the two optical systems which are the nearest to each other, have the double function of issuing signals determining respectivley the temporary increase and decrease in the speed of the mechanism paying off the optical fibers and the annulment of the signals issued by the photoelectric cells of the two optical systems which are the farthest from each other.

The present invention will be better understood from the following detailed description given only by way of non-limiting example and made with reference to the figures of the attached sheets of drawings, in which:
- figure 1 shows diagrammatically in perspective view an improved apparatus according to the invention,

Figure 2 shows in perspective view and in enlarged scale an element of the apparatus of figure 1,
- figures 3a and 3b show in enlarged scale the longitudinal and the cross section, respectively, of another element of the apparatus of figure 1, and
- figure 4 represents the working diagram of a particular of the apparatus.

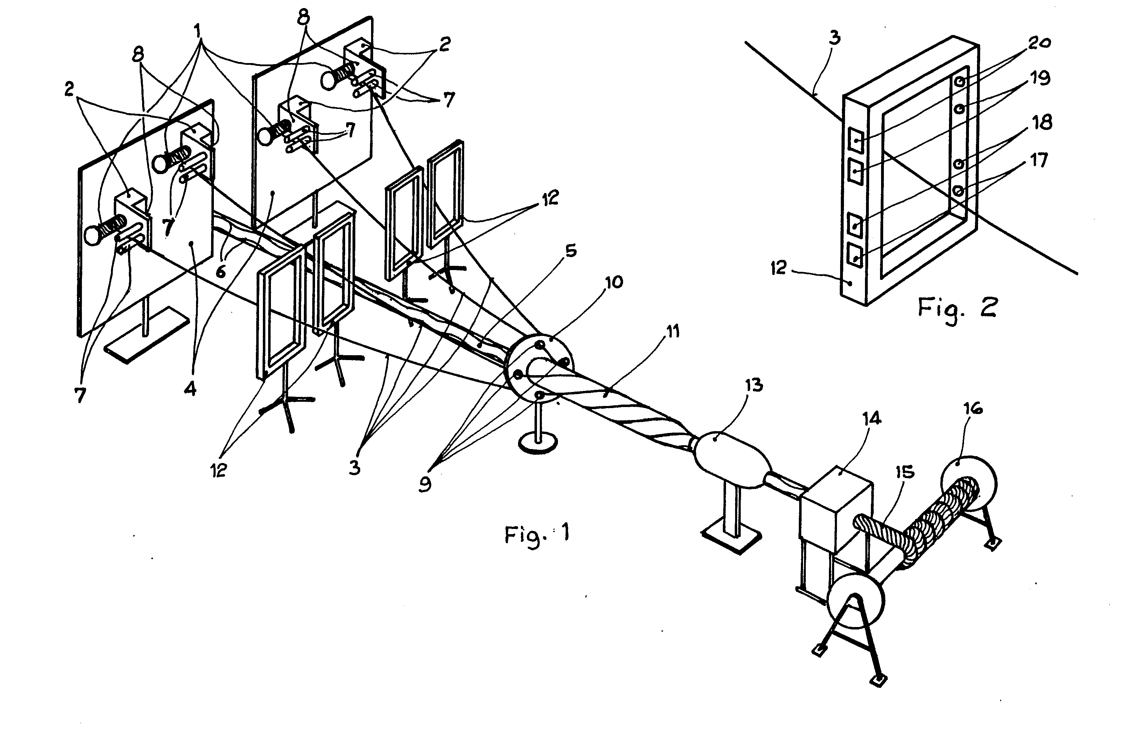

An apparatus built up in accordance with the invention is now described with reference to figure 1.

A plurality of coils 1, provided with braking devices 2 and encasing optical fibers 3, is supported by fixed frames 4 through which passes with a rectilinear motion a core 5, provided with grooves 6 in the form of an open helix, which is paid off from a coil not shown in the figure. The coils 1, encasing the optical fibers, are preferably situated above the grooved core.

A mechanism for paying off the optical fibers 3 from the coils 1 comprises pairs of rollers 7, at least one of which is motor-driven, passing through which the optical fibers are drawn. The rollers are supported by brackets 8, which sustain also the coils 1 and the braking device 2 and are fastened to the frames 4.

Therefore the optical fibers take a free configuration under the action of their own weight until they passs through holes 9 obtained of a flange 10, fixed on a rigid tubular body 11, to be leant on the outer surface of said body inside which passes core 5. In the area where they remain free, the optical fibers take the configuration of arcs of catenary and pass through frames 12, each containing a first and a second optical system which, as it will be described in detail herebelow, detect the position of the optical fibers and exert an appropriate control action on the speed of rollers 7.

Downstream the rigid tubular body 11 there is a head 13, more specifically described below, which inserts the optical fibers in the grooves 6 of the core 5.

Along the direction of advancement of said core 5, provision is made of a taping device 14 which winds up a tape, made for example of elastomeric material, around the core, and closes outwardly the grooves 6 into which are positioned the optical fibers 3. Further, the apparatus comprises a mechanism for the rectilinear advancement of the core 5, consisting of a motor-driven coil 16, which has also the task of taking up the cable 15 now in its final form.

Figure 2 represents in enlarged scale one of the frames 12, of rectangular shape, in whose central portion, in steady condition, passes an optical fiber 3. The upper part of said frame contains the first optical system comprising the photoelectric cells 19 and 20, whilst its lower part contains the second optical system comprising the photoelectric cells 17 and 18. All the photoelectric cells are parallel and superimposed to one another and intersect the plane defined by the catenary configuration of the optical fiber. Moreover, there is an electric circuit, already known per se and not shown in the figures, which receives the signals issued by the optical systems and transforms them, as it will be explained below, into controls able to vary the speed of rollers 7, shown in figure 1, of the mechanism paying off the optical fibers 3 from the coils 1.

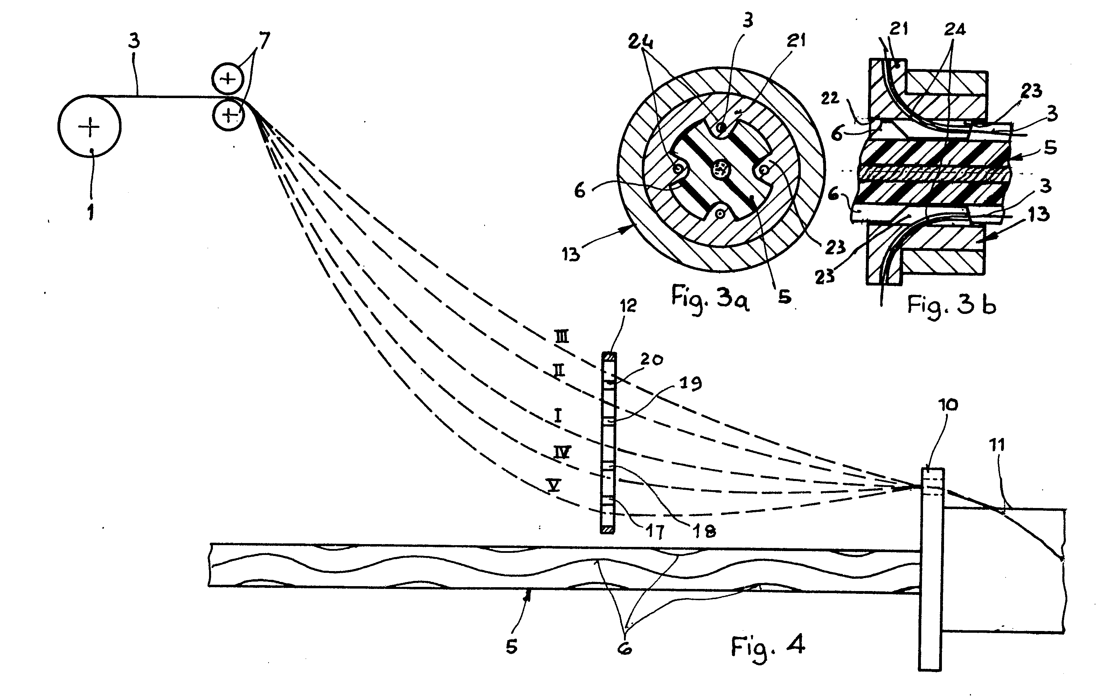

As said above, downstream the rigid tubular body 11 there is a head 13, used to insert the optical fibers in the core grooves and shown in figures 3a and 3b, which is of conventional type and consists of a rigid body 21 provided with a through recess 22 at which are cantilevered a plurality of extensions 23 to be coupled with the grooves 6 of the core 5.

In addition, the rigid body 21 and the extensions 23 are passed through the holes 24 to allow the passage of the optical fibers 3. Figure 1 illustrates diagrammatically the general operation of the apparatus.

The core 5 advances with a rectilinear motion owing to the drawing action exerted by the motor-driven coil 16 and its grooves 6 are coupled to the extensions 23, visible in figure 3b, of the head 13. At the same time the optical fibers 3 are paid off from the coils 1 by virtue of the rollers 7 of the paying off mechanism and are supplied to the through holes 24, visible in figure 3b, of the head 13. The open helix grooves 6 generate an alternative rotary motion of the head 13, which is followed by the optical fibers coming from fixed coils 1, so that said fibers are taken up and paid off on the outer surface of the rigid tubular body 11.

In the apparatus, the mechanism used to advance the core 5, constituted by the motor-driven coil 16, and the mechanism used to pay off the optical fibers from the coils, constituted by rollers 7, have separate driving systems whose operation speeds, constant and different from each other, are able to ensure that, in the time interval in which the core 5 advances by a certain portion, such an amount of optical fibers is paid off, which is sufficient to cover plentifully the theoretical length of the grooves 6 present in that portion. Actually, however, neither the development of groove 6 is quite regular, nor the speeds of the mechanism are strictly constant. Therefore, the catenary configurations taken by the optical fibers 3 in the portion between the rollers 7 and the flange 10 when the fibers pass in steady condition in the central part of frames 12, will vary in consequence of these irregularities, deviating from the positions which ensure the correct insertion of the optical fibers 3 into the grooves 6, as it is indicated with the reference letter I in figure 4.

Said figure 4 illustrates in detail the operation of the optical systems, associated to a frame 12, having the task of imparting to the optical fiber 3, by means of signals controlling the increase and/or the decrease in the speed of rollers 7, a catenary configuration substantially corresponding to that indicated with the reference I, in order to eliminate all possible working irregularities.

In fact, it is possible to reduce the concavity of the catenary and to lift up the optical fiber, or to enhance said concavity and to lower said fiber, by increasing or by decreasing, respectively, with respect to the steady condition, the speed of rollers 7, so that a greater or a smaller amount of optical fiber will be paid off from coil 1.

Consequently, if for any reason the optical fiber 3 is lifted up, taking configuration II in its passage before photoelectric cell 19, the latter transmits to rollers 7 a signal controlling the temporary increase of their speed. If, in spite of this, the optical fiber goes on lifting up to take the configuration III, its passage before the photoelectric cell 20 originates the transmission to the rollers of a signal controlling the permanent increase of their speed.

Owing to this, the optical fiber lowers to take the configuration I, passing before the photoelectric cell 19 which controls the annulment of the permanent increase of speed imparted to rollers 7 by the photoelectric cell 20.

On the contrary, if for any reason the optical fiber 3 lowers, taking configuration IV in its passage before the photoelectric cell 18, the latter transmits to rollers 7 a signal controlling the temporary decrease of their speed. If, in spite of this, the optical fiber goes on lowering to take configuration V, its passage before the photoelectric cell 17 originates the transmission to the rollers 7 of a signal controlling the permanent decrease of their speed. Owing to this latter control, the optical fiber lifts up again, taking configuration I, and its passage before the photoelectric cell 18 controls the annulment of the permanent decrease of speed imparted to rollers / by photoelectric cell 17.

From the above description and from the following considerations it can be understood that the present invention is able to achieve the proposed goals.

A pre-established catenary configuration, with a certain curvature of the optical fibers there where these are not supported or guided before their insertion in the core of the cable to be produced, is imparted and maintained in the apparatus during its operation.

Consequently, any risk for the optical fibers to be subjected to prejudicial curvatures, in particular to micro-bendings, inside the apparatus, is eliminated.

Further, if it is considered that each catenary configuration taken by an optical fiber involves a well defined tension stress existing therein, it is possible to deduce the following. In an apparatus according to the invention the tension stresses imparted to the optical fibers are limited to pre-established values corresponding to the particular catenary configuration imparted to them. Therefore, said values can be selected in such a way as to ensure a plenty of optical fibers in the grooves of the produced cables, able to avoid the generation of tensions harmful for the optical fibers during the laying operation.

Although a particular embodiment of an apparatus according to the invention has been described and illustrated, it is understood that the invention includes in its scope any other possible alternative embodiments deriving from the above indicated inventive idea.

**Claims**

1. An apparatus for manufacturing cables (15) comprising optical fibers (3), of the type containing a core (5) provided on its outer surface with at least a groove (6) in the form of an open helix which encases at least an optical fiber (3), said apparatus comprising:
- a plurality of coils (1) containing the optical fibers (3), which rotate about their own axis and are mounted on a fixed frame (4),
- a head (13) to insert the optical fibers (3) in the grooves (6) of the core (5), which is provided with a through cavity (22) for the passage of the latter and with a plurality of extensions (23), to be inserted in the core grooves (6), cantilevered in said through cavity (22) and having a through hole (24) for the passage of the optical fibers (3),
- a rigid tubular body (11) interposed between the coil-holding frame (4) and the head (13) , which permits the passage of the cable core (5) and which supports the optical fibers (3) on its outer surface,
- a mechanism (16) for the rectilinear advancement of the core (5), originating the alternative rotatory movement of said head (13),
the apparatus being characterized by the fact of comprising:
- a mechanism (7) for paying off the optical fibers (3) from the coils (1) containing them,
- a first (19, 20) and a second (17, 18) optical . system for each optical fiber (3), respectively situated in the upper and in the lower part of a fixed frame (12) into which passes an individual optical fiber (3) having a catenary configuration, the first optical system (19, 20) comprising at least one photoelectric cell, arranged transversally to the direction of advancement of the optical fiber (3) and intended to issue signals determining an increase in the speed of the meachanism (7) paying off the optical fiber (3), the second optical system (17, 18) comprising at least one photoelectric cell, arranged transversally to the direction of advancement of the optical fiber (3) and intended to issue signals determining a decrease in the speed of the mechanism (7) paying off the optical fiber (3), the plane defined by the catenary configuration of the optical fiber intersecting said photoelectric cells.

2. An apparatus as in claim 1, characterized in that both the first (19, 20) and the second (17, 18) optical system comprise at least two photoelectric cells, superimposed and parallel to each other, which are arranged transversally to the direction of advancement of the optical fibers (3), the two photoelectric cells (20, 17), belonging to the first (19, 20) and to the second (17, 18) system, which are the farthest from each other, issuing respectively signals determining the permanent increase and decrease in the speed of the mechanism (7) paying off the optical fiber (3) from the coil (1), the two photoelectric cells (19, 18), belonging to the first (19, 20) and to the second (17, 18) optical system, which are the nearest to each other, issuing respectively signals determining the temporary increase and decrease in the speed of the mechanism (7) paying off the optical fiber (3) from the coil (1), as well as signals annulling the signals, already imparted by the photoelectric cells (20, 17) farthest from each other, which determine the permanent increase and decrease in said speed.

3. An apparatus as in claim 1, characterized in that the mechanism (7) paying off the optical fibers (3) from the coils (1) containing them comprises, from each optical fiber, at least a pair of rollers (7), at least on of which is motor-driven, between which said optical fiber (3) is interposed, each coil (1) being provided with a braking device (2).

Fig. 2

Fig. 1

P. 566

Fig. 3a

Fig. 3b

Fig. 4

0 280 989

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 022 644 (NORTHERN TELECOM LTD.) <br> * Page 3, line 92 - page 4, line 17; page 1, lines 64-70; figures 5,8 * <br> --- | 1-3 | G 02 B 6/44 |
| Y | DE-A-3 343 286 (LICENTIA PATENT-WERWALTUNGS-GmbH) <br> * Page 6, line 8 - page 7, line 13; figure * <br> --- | 1-3 | |
| A | US-A-4 195 791 (FRAZEE) <br> * Column 2, line 52 - column 3, line 3; claim 1; figure 1 * <br> --- | 1-3 | |
| A | US-A-4 250 130 (LaSPISA) <br> * Column 2, line 55 - column 3, line 17; figure 1 * <br> --- | 1-3 | |
| A | GB-A-2 168 730 (PIRELLI SpA) <br> * Abstract; figure 1 * & IT-A-240 091 (Cat. D) <br> --- | 1 | |
| A,D | EP-A-0 020 189 (LIGNES TELEGRAPHIQUES ET TELEPHONIQUES) <br> * Page 4, line 12 - page 5, line 3; figure 1 * <br> ----- | 1 | TECHNICAL FIELDS SEARCHED (Int. Cl.4) <br><br> G 02 B <br> B 65 H <br> D 07 B |

The present search report has been drawn up for all claims

| Place of search | Date of completion of the search | Examiner |
|---|---|---|
| THE HAGUE | 03-06-1988 | GRUNFELD M.Y.E. |

EPO FORM 1503 03.82 (P0401)